(19) Europäisches Patentamt
European Patent Office
Office européen des brevets

(11) **EP 4 567 954 A1**

(12) **EUROPEAN PATENT APPLICATION**
published in accordance with Art. 153(4) EPC

(43) Date of publication:
**11.06.2025 Bulletin 2025/24**

(21) Application number: **23882964.2**

(22) Date of filing: **12.10.2023**

(51) International Patent Classification (IPC):
$H01M\ 10/0569^{(2010.01)}$   $H01M\ 10/0567^{(2010.01)}$
$H01M\ 4/38^{(2006.01)}$   $H01M\ 10/052^{(2010.01)}$
$H01M\ 10/0568^{(2010.01)}$

(52) Cooperative Patent Classification (CPC):
**H01M 4/38; H01M 10/052; H01M 10/0567;
H01M 10/0568; H01M 10/0569;** Y02E 60/10

(86) International application number:
**PCT/KR2023/015743**

(87) International publication number:
**WO 2024/090857 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.10.2022 KR 20220139326**

(71) Applicant: **LG Energy Solution, Ltd.
Seoul 07335 (KR)**

(72) Inventors:
• **CHA, Sunyoung**
  **Daejeon 34122 (KR)**
• **YOO, Solji**
  **Daejeon 34122 (KR)**
• **JEON, Hyelim**
  **Daejeon 34122 (KR)**
• **LEE, Suyeong**
  **Daejeon 34122 (KR)**
• **LEE, Boram**
  **Daejeon 34122 (KR)**

(74) Representative: **Plasseraud IP
104 Rue de Richelieu
CS92104
75080 Paris Cedex 02 (FR)**

(54) **ELECTROLYTE FOR LITHIUM-SULFUR SECONDARY BATTERY AND LITHIUM-SULFUR SECONDARY BATTERY COMPRISING SAME**

(57)    The present disclosure relates to an electrode for lithium-sulfur secondary battery that can lower the resistance of lithium-sulfur secondary batteries and improve output characteristics and a lithium-sulfur secondary battery comprising the same. The electrolyte for lithium-sulfur secondary battery includes a lithium salt, a non-aqueous solvent and an additive, wherein a first mixing energy(Gmix1) of the electrolyte and dilithio pertetrasulfide ($Li_2S_4$), a second mixing energy(Gmix2) of the electrolyte and dilithio perhexasulfide ($Li_2S_6$), and a third mixing energy (Gmix3) of the electrolyte and dilithio peroctasulfide ($Li_2S_8$), which are calculated at room temperature ($20 \pm 5°C$) in accordance of the theory of COSMO-RS (Conductor like Screening Model for real Solvent), satisfy a prescribed relationship.

【FIG. 2a】

**Description**

**[TECHNICAL FIELD]**

Cross Citation with Related Application(s)

This application claims the benefit of priority to Korean Patent Application No. 10-2022-0139326 filed on October 26, 2022 with the Korean Intellectual Property Office, the disclosure of which is incorporated herein by reference in its entirety.

The present disclosure relates to an electrolyte for lithium-sulfur secondary battery that can lower the resistance of lithium-sulfur secondary batteries and improve output characteristics, and a lithium-sulfur secondary battery comprising the same.

**[BACKGROUND]**

As the utilization range of secondary batteries is expanded to electric vehicles (EV), energy storage systems(ESS) or the like, lithium-ion secondary batteries having a relatively low energy storage density relative to weight are gradually reaching their limits. In recent years, interest in various next-generation secondary batteries with high energy density has increased, and among these, research and development on lithium-sulfur secondary batteries, which theoretically have a high energy storage density relative to weight, are becoming active.

Generally, such a lithium-sulfur secondary battery refers to a chargeable/dischargeable battery system that includes a sulfur molecule (e.g., $S_8$) having an S-S bond (Sulfur-Sulfur Bond), or a sulfur-containing composite or the like as a cathode active material, and includes metallic lithium or the like as an anode active material. Such lithium-sulfur secondary batteries have abundant reserves around the world, and can be manufactured at a relatively low cost by using sulfur having a small weight relative to metal as a cathode active material, which makes it possible to implement a secondary battery having a very high energy density relative to weight.

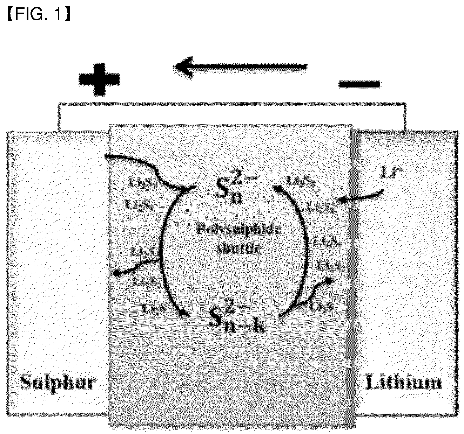

As shown in FIG. 1, in the discharging process of the lithium-sulfur secondary battery, a continuous reduction reaction of sulfur (e.g., $S_8$) contained in the cathode and a continuous oxidation reaction of metallic lithium contained in the anode occur within each electrode and electrolyte. While such continuous oxidation/reduction reactions occur, multiple types of lithium polysulfides (LiPS) are formed within the electrolyte and can move between electrodes. The final formed solid-state lithium sulfide ($Li_2S$) may be deposited on the anode. For example, the reaction process of lithium polysulfide and lithium sulfide by the continuous reduction reaction of sulfur can be summarized as $S_8 \rightarrow Li_2S_8 \rightarrow Li_2S_6 \rightarrow Li_2S_4 \rightarrow Li_2S_2 \rightarrow Li_2S$, among which $S_8$, $Li_2S_2$ and $Li_2S$ can have a solid state, and the remaining lithium polysulfide ($Li_2S_n$; n is 4, 6 or 8) may have a liquid state dissolved in the electrolyte.

However, in the process of sequential and continuous conversion of sulfur, lithium polysulfide and lithium sulfide of which phases are different from each other, this conversion process is not smooth and is not performed quickly, so that lithium-sulfur secondary batteries have relatively high electrical resistance and low output characteristics compared to existing lithium-ion secondary batteries. Furthermore, in the process of forming lithium polysulfide by the continuous oxidation/reduction reaction, some of the lithium polysulfide dissolved in the electrolyte may cause side reactions or the like with the anode, which may be one factor that reduces the life characteristics of the lithium-sulfur secondary battery.

Such high resistance, low output characteristics, and life characteristics are major factors that make it difficult to apply lithium-sulfur secondary batteries, and as a result, there is a need for continuous development of lithium-sulfur secondary batteries having lower resistance and improved output characteristics.

**[DETAILED DESCRIPTION OF THE INVENTION]**

**[Technical Problem]**

It is an object of the present disclosure to provide an electrolyte for lithium-sulfur secondary batteries that can facilitate the continuous conversion process of lithium polysulfide, and thus lower the resistance of lithium-sulfur secondary batteries and improve output characteristics.

It is another object of the present disclosure to provide a lithium-sulfur secondary battery that comprises the above-mentioned electrolyte, thereby having improved output characteristics and life characteristics.

**[Technical Solution]**

According to one aspect of the present disclosure, there is provided an electrolyte for lithium-sulfur secondary battery comprising a lithium salt, a non-aqueous solvent and an additive,

wherein a first mixing energy(Gmix1) of the electrolyte and dilithio pertetrasulfide ($Li_2S_4$), a second mixing energy(Gmix2) of the electrolyte and dilithio perhexasulfide ($Li_2S_6$), and a third mixing energy (Gmix3) of the electrolyte and dilithio peroctasulfide ($Li_2S_8$), which are calculated at room temperature ($20\pm5°C$) in accordance of the theory of COSMO-RS (Conductor like Screening Model for real Solvent), satisfy the relation that Gmix1-Gmix2 is 0.73 kcal/mol or more, and Gmix1-Gmix3 is 0.80 kcal/mol or more.

According to another aspect of the present disclosure, there is provided a lithium-sulfur secondary battery comprising: a cathode containing sulfur as a cathode active material; an anode containing metallic lithium; a separator disposed between the cathode and the anode; and the electrolyte.

[Advantageous Effects]

The electrolyte of the present disclosure optimizes the difference of solubility between lithium polysulfide generated during the charging/discharging process of a lithium-sulfur secondary battery.

It was confirmed that by applying such an electrolyte, the lithium-sulfur secondary battery can smoothly and quickly perform a continuous reduction and conversion of lithium polysulfide during its discharge process. As a result, it was confirmed that the lithium-sulfur secondary battery has lower electrical resistance compared to previously known batteries of the same type, and further can exhibit improved output characteristics.

In addition, the lithium-sulfur secondary battery can smoothly perform the conversion process of the lithium polysulfide and the like, thereby reducing side reactions or the like between the lithium polysulfide and the anode, which can also contribute to improving the life characteristics of the lithium-sulfur secondary battery.

Therefore, the present disclosure can contribute to improving the output characteristics and life characteristics, which have been the biggest obstacles to the commercialization of lithium-sulfur secondary batteries.

[BRIEF DESCRIPTION OF THE DRAWINGS]

FIG. 1 is a schematic diagram showing that multiple types of lithium polysulfides are formed in the electrolyte through oxidation and reduction reactions during the charging/discharging process of a lithium-sulfur secondary battery;

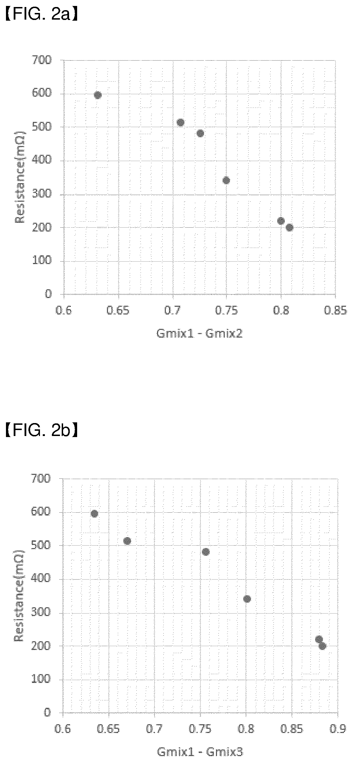

FIG. 2a is a graph showing the relation between Gmix1-Gmix2 (kcal/mol) of the electrolyte and the resistance factor ($m\Omega$) of secondary batteries at a state of charge (SOC) of 80% for the lithium-sulfur secondary batteries manufactured using the electrolytes of Examples 1 to 3 and Comparative Examples 1 to 3; and

FIG. 2b is a graph showing the relation between Gmix1-Gmix3 (kcal/mol) of the electrolyte and the resistance factor ($m\Omega$) of secondary batteries at a state of charge (SOC) of 80% for the lithium-sulfur secondary batteries manufactured using the electrolytes of Examples 1 to 3 and Comparative Examples 1 to 3.

[DETAILED DESCRIPTION OF THE EMBODIMENTS]

Now, an electrolyte according to a specific embodiment of the disclosure and a lithium-sulfur secondary battery comprising the same will be described in detail with reference to the accompanying drawings.

FIG. 1 is a schematic diagram showing that multiple types of lithium polysulfides are formed in the electrolyte through oxidation and reduction reactions during the charging/discharging process of a lithium-sulfur secondary battery.

According to one embodiment of the present disclosure, there is provided an electrolyte for lithium-sulfur secondary battery comprising a lithium salt, a non-aqueous solvent and an additive,

wherein a first mixing energy(Gmix1) of the electrolyte and dilithio pertetrasulfide ($Li_2S_4$), a second mixing energy(Gmix2) of the electrolyte and dilithio perhexasulfide ($Li_2S_6$), and a third mixing energy (Gmix3) of the electrolyte and dilithio peroctasulfide ($Li_2S_8$), which are calculated at room temperature ($20\pm5°C$) in accordance of the theory of COSMO-RS (Conductor like Screening Model for real Solvent), satisfy the relation that Gmix1-Gmix2 is 0.73 kcal/mol or more, and Gmix1-Gmix3 is 0.80 kcal/mol or more.

The present inventors continued research about the characteristics of a lithium-sulfur secondary battery in order to develop an electrolyte that can lower the electrical resistance and improve the output characteristics. In particular, the present inventors have studied every angle to clarify which characteristics of the conversion process have a significant effect on the resistance and output of a lithium-sulfur secondary battery because a continuous reduction/conversion process of $S_8$ (solid) $\rightarrow Li_2S_8$ (liquid) $\rightarrow Li_2S_6$ (liquid) $\rightarrow Li_2S_4$ (liquid) + $Li_2S_2$ (solid) $\rightarrow Li_2S$ (solid) occurs during the discharge process of a lithium-sulfur secondary battery, and a phase changes occur during such a process.

As a result of this ongoing research, the inventors have confirmed that the characteristics of the electrolytes for multiple types of lithium polysulfide ($Li_2S_n$; n is 4, 6, or 8) before the conversion to solid ($Li_2S_2$) have the greatest effect on lowering the resistance of a lithium-sulfur secondary battery.

Furthermore, as a result of further experiments by the present inventors, it has been found that among the multiple types of lithium polysulfides, the electrolyte composition is controlled so that the difference between the first mixing energy (Gmix1), which defines the compatibility and solubility of the electrolyte for dilithio pertetrasulfide ($Li_2S_4$), and the second and third mixing energies (Gmix2 and Gmix3), which respectively define the solubility or the like of the electrolyte for dilithio perhexasulfide ($Li_2S_6$) and dilithio peroctasulfide ($Li_2S_8$), becomes larger by a prescribed level or more, thereby lowering the electrical resistance of the lithium-sulfur secondary battery and improving the output characteristics, and completed the invention.

This is presumed to be because as the solubility difference between the multiple types of lithium polysulfides increases, the reduction and conversion process between the liquid lithium polysulfides, which mainly occurs in the electrolyte, can proceed more smoothly, and further, as the first mixing energy (Gmix1) of the electrolyte for dilithio pertetrasulfide ($Li_2S_4$) becomes relatively high (i.e., the solubility of the electrolyte for $Li_2S_4$ becomes relatively low), the subsequent phase change process to solid can also proceed smoothly.

Thus, when an electrolyte for lithium-sulfur secondary battery that satisfies the characteristics of one embodiment is used, the resistance of the secondary battery can be lowered during the charging/discharging process, and as a result, the output characteristics of the secondary battery can be improved. In addition, as the conversion process between the lithium polysulfides is performed more smoothly, side reactions between the lithium polysulfide and the anode can also be suppressed, and thus the life characteristics of the lithium-sulfur secondary battery can also be further improved.

In the electrolyte of one embodiment described above, the first to third mixing energies refer to solvation free energies when the electrolyte and the lithium polysulfide ($Li_2S_n$; n is 4, 6, or 8) are respectively mixed, and can be calculated based on quantum mechanical calculations by the COSMO-RS theory on the basis of the structural information of each molecule (see, for example, "COSMO-RS: From Quantum Chemistry to Fluid Phase Thermodynamics and Drug Design", A. Klamt, Elsevier; Amsterdam, The Netherlands, 2005, and Korean Unexamined Patent Publication No. 2019-0011963). In more specific embodiments, the first to third mixing energies can be calculated using commercially available COSMOtherm software (COSMOlogic GmbH & Co. KG) that performs quantum mechanical calculations by the COSMO-RS theory.

Such first to third mixing energies may reflect the respective solubilities of the electrolyte of one embodiment and the lithium polysulfide ($Li_2S_n$; n is 4, 6, or 8). As the electrolyte of one embodiment satisfies a certain composition or the like described below, the first mixing energy at the time of mixing with $Li_2S_4$ is higher (i.e., the solubility is lower), and $Li_2S_6$ and $Li_2S_8$ can exhibit the characteristics that the second and third mixing energies are low (that is, the solubility is high).

Thereby, the electrolyte of one embodiment can satisfy the relation that Gmix1-Gmix2 is 0.73 kcal/mol or more, or 0.74 to 1.40 kcal/mol, or 0.80 to 1.10 kcal/mol, and Gmix1-Gmix3 is 0.80 kcal/mol or more, or 0.80 to 1.50 kcal./mol, or 0.85 to 1.20 kcal/mol, and the solubility difference between lithium polysulfides can appear large.

In addition, in more specific embodiments, the electrolyte of the one embodiment has $Gmix_2$-$Gmix_3$ of 0.05 kcal/mol or more, or 0.05 to 0.2 kcal/mol, or 0.06 to 0.1 kcal/mol, so that the solubility of the electrolyte for each of $Li_2S_6$ and $Li_2S_8$ can also show some differences.

As the difference between the first to third mixing energies becomes more than a certain level in this way, and the solubility difference for each lithium polysulfide ($Li_2S_n$; n is 4, 6, or 8) becomes more than a certain level, the reduction and conversion process between such lithium polysulfides proceeds more smoothly, so that the resistance of the lithium-sulfur secondary battery can be further reduced and the output can be further improved. However, the difference between the first to third mixing energies is excessively large, but the solubility of the electrolyte for any one type of lithium polysulfide, for example, $Li_2S_4$, is excessively low, and rather, the output characteristics of the secondary battery may deteriorate.

On the other hand, in order to achieve the difference between the above-mentioned first to third mixing energies and to secure appropriate solubility for each lithium polysulfide ($Li_2S_n$; n is 4, 6 or 8), the first mixing energy (Gmix1) may be -3.02 kcal/mol to -0.02 kcal/mol, the second mixing energy (Gmix2) may be - 3.39 kcal/mol to -0.83 kcal/mol, and the third mixing energy (Gmix3) may be -3.15 kcal/mol to -0.96 kcal/mol.

If the first mixing energy becomes too high or the second and third mixing energies become too low, the conversion process between lithium polysulfides may not proceed smoothly, or the solubility of some of the lithium polysulfides may become low, which may deteriorate the output characteristics of the lithium-sulfur secondary battery. On the contrary, if the first mixing energy is too low, or the second and third mixing energies are too high, it becomes difficult to achieve the difference between the first to third mixed energies mentioned above, so that the resistance of the secondary battery may increase.

On the other hand, the electrolyte of one embodiment basically includes a lithium salt, a non-aqueous solvent and an additive, and particularly includes a certain solvent composition as a non-aqueous solvent, and controls the concentration/content of the lithium salt and other additives to a certain range, so that the first to third mixing energies with respective lithium polysulfides and their differences can be satisfied.

In order for the electrolyte to meet the above-mentioned mixing energy range and difference, the non-aqueous solvent includes first and second organic solvents having different solubilities for lithium polysulfide ($Li_2S_n$; n is 4, 6 or 8), among which the first organic solvent acts as a solvent with good solubility for the lithium polysulfide, while the second organic solvent may be a non-solvent for the lithium polysulfide. In particular, by adjusting the composition of the first organic solvent and the second organic solvent included as a non-solvent, the mixing energy range and the difference therebetween can be achieved.

In a specific embodiment, the non-aqueous solvent contains 70 to 85% by volume, or 70 to 80% by volume, of an ether-based solvent including a dialkyl ether-based solvent and an alkylene glycol dialkyl ether-based solvent as the first organic solvent, and 15 to 30% by volume, or 20 to 30% by volume, of a furan-based solvent and/or tetrahydrofuran-based solvent as the second organic solvent which is the non-solvent, wherein the dialkyl ether-based solvent may be contained in an amount of 40 to 85% by volume, or 40 to 80% by volume, based on the total volume of the non-aqueous solvent.

At this time, a second organic solvent of the furan-based or tetrahydrofuran-based solvent, and a first organic solvent of the dialkyl ether-based solvent and the alkylene glycol dialkyl ether-based solvent may respectively act as a non-solvent and a solvent having different solubilities for the lithium polysulfide. Therefore, as such non-solvents and solvents are contained in the above-mentioned optimal composition and content range, the difference between the above-mentioned first to third mixing energies is satisfied, so that the resistance of the lithium-sulfur secondary battery is further reduced and the output characteristics can be further improved.

Further, the furan-based or tetrahydrofuran-based second organic solvent forms a SEI layer (solid electrolyte interface) on the surface of the metallic lithium, thereby suppressing the formation of lithium dendrites, and can suppress electrolyte decomposition on the surface of the metallic lithium of the anode, thereby improving the life characteristics of the secondary battery. Therefore, as the content or the like of the second organic solvent is optimized, the life characteristics of the lithium-sulfur secondary battery can also be improved.

Unlike the same, when the content of the furan-based or tetrahydrofuran-based second organic solvent is too large, the solubility of the electrolyte for some of the lithium polysulfide may be excessively reduced, which thus may deteriorate the characteristics of the lithium-sulfur secondary battery. In addition, in cases where the content of the furan-based or tetrahydrofuran-based second organic solvent becomes too small, or the content range of the dialkyl ether-based solvent in the first organic solvent becomes too small, and the like, it is difficult to satisfy the above-mentioned difference between the first to third mixed energies, so that the resistance of the lithium-sulfur secondary battery may increase and its output characteristics may deteriorate.

In a more specific embodiment, the second organic solvent may include both a furan-based solvent and a tetrahydrofuran-based solvent, wherein the mixing volume ratio of the furan-based solvent : tetrahydrofuran-based solvent may be 30:1 to 1:30, or 20:1 to 1:20.

In the composition of the non-aqueous solvent described above, the furan-based or tetrahydrofuran-based solvent may be a furan-based compound or a tetrahydrofuran-based compound in which an alkyl group having 1 to 4 carbon atoms is substituted or unsubstituted, and specific examples thereof include at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, 2-methyl tetrahydrofuran and 4-methyl tetrahydrofuran.

Among these, in consideration of the differences between the first to third mixing energies described above, and the like, 2-methylfuran, 2-methyl tetrahydrofuran, or 4-methyl tetrahydrofuran, or a combination of two or more selected from them, can be preferably used. For example, the 2-methylfuran may be used alone, or can be used in combination with 2-methyl tetrahydrofuran or 4-methyl tetrahydrofuran. For this combination, 2-methylfuran:2-methyl tetrahydrofuran or 4-methyl tetrahydrofuran can be mixed in a volume ratio of 30:1 to 1:30, or 20:1 to 1:20.

Further, as the dialkyl ether-based solvent, an ether-based compound to which an alkyl group having 1 to 10 carbon atoms or 1 to 5 carbon atoms is bonded can be used, and specific examples thereof include at least one selected from the group consisting of dimethyl ether, diethyl ether, dipropyl ether, methyl ethyl ether, methyl propyl ether, ethyl propyl ether, dimethoxyethane, diethoxyethane and methoxyethoxyethane.

Further, as the alkylene glycol dialkyl ether-based solvent, a compound in which two or more alkylene glycol groups having 1 to 5 carbon atoms, or 2 to 3 carbon atoms are bonded to an alkyl group having 1 to 5 carbon atoms via an ether bond (-O-) can be used. Specific examples thereof include at least one selected from the group consisting of diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether and polyethylene glycol methyl ethyl ether.

Among these, in consideration of the differences between the first to third mixed energies mentioned above, and the like, dimethoxyethane as the dialkyl ether solvent, and diethylene glycol dimethyl ether as the alkylene glycol dialkyl ether solvent may be appropriately combined.

Meanwhile, the lithium salt is an electrolyte salt used to increase ionic conductivity, and can be used without limitation as long as it is commonly used in the art. Specific examples of such lithium salts include at least one selected from the group consisting of $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiC_4BO_8$, $LiAsF_6$, $LiSbF_6$, $LiAlCl_4$, $CH_3SO_3Li$, $CF_3SO_3Li$, $(CF_3SO_2)_2NLi$, $(C_2F_5SO_2)_2NLi$, $(SO_2F)_2NLi$ (LiFSI) and $(CF_3SO_2)_3CLi$. However, in consideration of the electrical conductivity of the lithium-sulfur secondary battery or meeting the above-mentioned mixing energy difference, lithium salts in the form of sulfonates, such as $CH_3SO_3Li$, $CF_3SO_3Li$, $(CF_3SO_2)_2NLi$, $(C_2F_5SO_2)_2NLi$, $(SO_2F)_2NLi$ or $(CF_3SO_2)_3CLi$ can be used appropriately.

The lithium salt may be contained in the electrolyte at a concentration of 0.2 to 0.8 mol%, or 0.25 to 0.75 mol%, or 0.30 to 0.70 mol%, so that the above-mentioned electrolyte can appropriately satisfy the difference between the first to third mixing energies, and the like. If the concentration of lithium salt is too low, the electrical conductivity of the lithium-sulfur secondary battery may not be sufficient, and if the concentration of lithium salt is too high, it may be difficult to satisfy the difference between the first to third mixed energies, which may increase the resistance of the lithium-sulfur secondary battery.

On the other hand, the electrolyte of the above-mentioned embodiment further includes an additive for improving the characteristics of the lithium-sulfur secondary battery in addition to the non-aqueous solvent and lithium salt. Examples of such additives include at least one selected from the group consisting of lithium nitrate ($LiNO_3$), lithium thiocyanate ($LiSCN$), potassium nitrate ($KNO_3$), cesium nitrate ($CsNO_3$), magnesium nitrate ($Mg(NO_3)_2$), barium nitrate ($Ba(NO_3)_2$), lithium nitrite ($LiNO_2$), potassium nitrite ($KNO_2$) and cesium nitrite ($CsNO_2$), among which lithium nitrate and/or lithium thiocyanate can be preferably used.

Further, the additive may be contained in an amount of 0.8 to 4.0% by weight, 0.9 to 3.5% by weight based on the total weight of the electrolyte. If the content of the additive is too low, the characteristics of the lithium-sulfur secondary battery may not be sufficient, and if the content of the additive is too high, it is difficult to satisfy the difference between the first to third mixing energies, which may increase the resistance of the lithium-sulfur secondary battery.

As mentioned above, the electrolyte of one embodiment includes a lithium salt and an additive in a certain content range along with a non-aqueous solvent of a specific composition, thereby satisfying the difference between the first to third mixed energies mentioned above, and exhibiting optimized solubility for lithium polysulfides formed during discharge of a sulfur secondary battery. As a result, it is possible to facilitate the conversion process between the lithium polysulfide during charging/discharging of the lithium-sulfur secondary battery, lower the resistance of the secondary battery, and further improve its output characteristics and life characteristics.

In particular, when the profiles of the initial charge voltage and the charge termination voltage in response to the change in charging current are respectively measured and derived for the lithium-sulfur secondary battery, and the resistance factor in response to the state of charge (SOC) of the secondary battery is calculated therefrom, the secondary battery exhibits a low resistance factor of 400mΩ or less, or 50 to 400mΩ or less, or 100 to 350mΩ at SOC of 80%.

On the other hand, the method of measuring and calculating such a resistance factor is specifically described in International Patent Publication WO2016/126075 by the present inventors, and the like.

Thus, according to another embodiment of the invention, there is provided a lithium-sulfur secondary battery comprising: a cathode containing sulfur as a cathode active material; an anode containing metallic lithium; a separator disposed between the cathode and the anode; and the electrolyte of one embodiment. This lithium-sulfur secondary battery includes the electrolyte of one embodiment and thus can exhibit improved output characteristics and life characteristics along with low resistance.

In the secondary battery of the other embodiment, the cathode may include a cathode active material and a binder, and may further include a conductive material. Further, the cathode may be one in which an active material layer containing a cathode active material, a binder, and the like is formed on a cathode current collector.

At this time, the cathode current collector supports the active material layer and is not particularly limited as long as it has high conductivity without causing chemical changes in the corresponding battery. For example, copper, stainless steel, aluminum, nickel, titanium, heat-treated carbon, or copper or stainless steel of which surface is treated with carbon, nickel, titanium, silver, or the like, an aluminum-cadmium alloy, or the like can be used.

Further, the cathode current collector may have fine protrusions and depressions formed on a surface thereof to enhance the bonding strength with an active material layer, and may be used in various forms such as a film, a sheet, a foil, a net, a porous body, a foaming body, a non-woven fabric, or the like.

The cathode active material may contain sulfur, and more specifically, elemental sulfur (Ss), an organic sulfur compound, a sulfur-carbon composite, a polymer (($(C_2S_x)_n$: x=2.5 to 50, n≥ 2) or the like can be used as the cathode active material. The elemental sulfur ($S_8$) may be appropriately used in consideration of the characteristics of the electrolyte of one embodiment.

The cathode active material containing sulfur may be contained in an amount of 40 to 80 parts by weight, preferably 50 to 70 parts by weight, based on 100 parts by weight of the total weight of the cathode. If the content of the cathode active material is lowered, the energy density of the secondary battery may decrease, and if the content thereof is too large, the conductivity and stability of the electrode may decrease.

Further, the cathode may further include at least one additive selected from a transition metal element, a group IIIA element, a group IVA element, a sulfur compound of these elements, and an alloy of these elements and sulfur, in addition to the above-mentioned cathode active materials.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg, and the like, and the group IIIA element may comprise Al, Ga, In, Tl and the like, and the group IVA element may comprise Ge, Sn, Pb, and the like.

On the other hand, the binder is a component that assists in the binding between the active material and the current collector. For example, the binder may be at least one selected from the group consisting of polyvinylidene fluoride(PVdF), polyvinylidene fluoride-polyhexafluoropropylene copolymer(PVdF/HFP), polyvinyl acetate, polyvinyl alcohol, polyvinyl ether, polyethylene, polyethylene oxide, alkylated polyethylene oxide, polypropylene, polymethyl (meth)acrylate, polyethyl (meth)acrylate, polytetrafluoroethylene(PTFE), polyvinyl chloride, polyacrylonitrile, polyvinylpyridine, polyvinylpyrrolidone, styrene-butadiene rubber, acrylonitrile-butadiene rubber, ethylene-propylene-diene monomer(EPDM) rubber, sulfonated EPDM rubber, fluororubber, carboxymethylcellulose(CMC), starch, hydroxypropylcellulose, regenerated cellulose, and a mixture thereof, but are not necessarily limited thereto.

The binder may typically be added in an amount of 1 to 15 parts by weight based on 100 parts by weight of the total weight of the cathode. If the content of the binder is less than 1 part by weight, the adhesive force between the active material layer and the current collector may be insufficient, and if the content of the binder exceeds 15 parts by weight, the adhesive force is improved, but the content of the cathode active material decreases accordingly, and the battery capacity may decrease.

On the other hand, the conductive material is a component for improving electrical conductivity, and is not particularly limited as long as it is an electronically conductive material that does not cause a chemical change in a secondary battery. For example, as the conductive material, carbon black, graphite, carbon fiber, carbon nanotube, a metal powder, a conductive metal oxide, an organic conductive material, etc. may be used, and currently commercially available products may include acetylene black series (products from Chevron Chemical Company, Gulf Oil Company, etc.), Ketjen Black EC series (products from Armak Company), Vulcan XC-72 (a product from Cabot Company), and Super P (a product from MMM Company), etc. For example, acetylene black, carbon black, graphite, etc. may be used.

Further, in the lithium-sulfur secondary battery of the other embodiments, a filler may be optionally added to the cathode as a component that suppresses expansion of the cathode active material containing sulfur. Such a filler is not particularly limited as long as it can suppress the expansion of the electrode without inducing chemical changes in the battery. For example, olefinic polymers such as polyethylene and polypropylene; fibrous materials such as glass fiber and carbon fiber; etc. can be used.

The cathode can be manufactured by dispersing and mixing a cathode active material, a conductive material, and a binder in a dispersion medium (solvent) to form a slurry, applying the slurry onto a cathode current collector, and then drying and rolling it. As the dispersion medium, NMP (N-methyl-2-pyrrolidone), DMF(dimethyl formamide), DMSO(dimethyl sulfoxide), ethanol, isopropanol, water, and mixtures thereof can be used, but is not limited thereto.

In the secondary battery of the other embodiments mentioned above, the anode may include metallic lithium, and for example, it may include a lithium metal or alloy layer formed on the anode current collector.

Such an anode current collector is not particularly limited as long as it has high conductivity without causing chemical changes in a battery, and may be selected from the group consisting of copper, aluminum, stainless steel, zinc, titanium, silver, palladium, nickel, iron, chromium, alloys thereof, and combinations thereof. The stainless steel may have its surface treated with carbon, nickel, titanium or silver, and aluminum-cadmium alloys may be used as the alloy, and in addition thereto, baked carbon, nonconductive polymers of which surface is treated with a conductor, conductive polymers or the like may also be used. As the anode current collector, a copper thin plate is generally used.

The metallic lithium may be lithium metal or an alloy. At this time, the lithium alloy includes elements that can be alloyed with lithium, and specifically, it may be an alloy of lithium and one or more metals selected from the group consisting of Si, Sn, C, Pt, Ir, Ni, Cu, Ti, Na, K, Rb, Cs, Fr, Be, Mg, Ca, Sr, Sb, Pb, In, Zn, Ba, Ra, Ge and Al. The metallic lithium may be a sheet or foil, and in some cases, may have a form of depositing or coating lithium metal or lithium alloy on a current collector using a dry process, or may have a form of depositing or coating particulate metal and alloy using a wet process.

A conventional separator may be interposed between the cathode and the anode. The separator is a physical separator having the function of physically separating electrodes, and can be used without any particular restrictions as long as it is used as a normal separator, and it is particularly preferable that it has low resistance to ion movement in the electrolyte and excellent wettability to an electrolyte. Further, the separator separates or insulates the cathode and the anode from each other and enables the transport of lithium ions between the cathode and the anode. Such separator is porous and may be made of nonconductive or insulating materials. The separator may be an independent member such as a film, or may be a coating layer added to the cathode and/or anode.

As examples of a polyolefin-based porous membrane that can be used as the separator, membranes formed with a polymer using a polyolefin-based polymer such as high-density polyethylene, linear low-density polyethylene, low-density polyethylene, or ultra-high-molecular-weight polyethylene, polypropylene, polybutylene, polypentene alone, or a polymer mixing these may be used. As examples of a non-woven fabric that can be used as the separator, non-woven fabric formed with a polymer using polyphenyleneoxide, polyimide, polyamide, polycarbonate, polyethyleneterephthalate, polyethylenenaphthalate, polybutyleneterephthalate, polyphenylenesulfide, polyacetal, polyethersulfone, polyetheretherketone, polyester, and the like, alone, or a polymer mixing these may be used, and, as a fiber form forming a porous web, such non-woven fabric includes a spunbond or meltblown form formed with long fibers.

The thickness of the separator is not particularly limited, but is preferably in a range of 1 to 100 $\mu$m, and more preferably in a range of 5 to 50 $\mu$m. When the thickness of the separator is less than 1 $\mu$m, mechanical properties may not be maintained, and when the thickness is greater than 100 $\mu$m, the separator functions as a resistive layer to decline battery performance. A pore size and porosity of the separator are not particularly limited, but the pore size is preferably from 0.1 to 50 $\mu$m, and the porosity is preferably from 10 to 95%. When the pore size of the separator is less than 0.1 $\mu$m or the porosity is less than 10%, the separator functions as a resistive layer, and when the pore size is greater than 50 $\mu$m or the porosity is greater than 95%, mechanical properties may not be maintained.

A lithium-sulfur secondary battery of another embodiment including the electrolyte, cathode, anode and separator as mentioned above can be manufactured through a process in which a cathode faces an anode, a separator is interposed therebetween, and then an electrolyte is injected.

On the other hand, the lithium secondary battery is not only applicable to a battery cell used as a power source of a small device but also particularly suitably usable as a unit cell of a battery module which is a power source of a medium and large-sized device. In this respect, a battery module in which at least two lithium secondary batteries are electrically connected (in series or in parallel) can be provided.

It is needless to say that the number of lithium secondary batteries comprised in the battery module may be variously adjusted in consideration of the use and capacity of the battery module. Furthermore, a battery pack in which the battery modules are electrically connected according to a conventional technique in the art can also be provided. The battery module and the battery pack may be used as a power source for at least one medium and large-sized device selected from power tools; electric cars comprising an electric vehicle (EV), a hybrid electric vehicle (HEV), and a plug-in hybrid electric vehicle (PHEV); electric trucks; electric commercial vehicles; or power storage systems, but the present disclosure is not limited thereto.

Hereinafter, preferred examples are presented in order to facilitate understanding of the present disclosure. However, it will be apparent to those skilled in the art that these examples are merely illustrative of the invention, various changes and modifications can be made within the scope and spirit of the invention, and such changes and modifications are intended to fall within the scope of the appended claims.

**Examples 1 to 3 and Comparative Examples 1 to 3: Manufacturing of electrolyte for lithium-sulfur secondary battery**

Non-aqueous solvents were mixed in accordance with the composition shown in Table 1 below, and then lithium salt and additives were dissolved at the concentrations and contents shown in Table 1 to manufacture electrolytes for each Example and Comparative Example.

[Table 1]

| | Non-aqueous solvent (material name (vol%)) | | Lithium salt | | Additive | |
|---|---|---|---|---|---|---|
| | First organic solvent | Second organic solvent | Type | Concentration (mol%) | Type | Content (wt.%) |
| Example 1 | DME (78.85) | 2-Methyl furan (1.45) & 2-methyltetrahydrofuran (19.70) | LiFSI | 0.67 | LiNO$_3$ | 0.90 |
| Example 2 | DME (79.93) | 2-Methyl furan (20.07) | LiFSI | 0.30 | LiNO$_3$ & LiSCN | 2.01 & 1.10 |
| Example 3 | DME (44.87) & diethylene glycol dimethyl ether (33.59) | 2-Methyl furan (21.54) | LiFSI | 0.50 | LiNO$_3$ | 2.01 |
| Comparative Example 1 | DME (61.99) & Tetraethylene glycol dimethyl ether (38.01) | - | LiFSI | 0.50 | LiNO$_3$ | 2.02 |
| Comparative Example 2 | DME (38.06) & triethylene glycol dimethyl ether (40.13) | 2-Methyl furan (21.81) | LiFSI | 0.75 | LiNO$_3$ | 2.01 |

8

(continued)

| | Non-aqueous solvent (material name (vol%)) | | Lithium salt | | Additive | |
|---|---|---|---|---|---|---|
| | First organic solvent | Second organic solvent | Type | Concentration (mol%) | Type | Content (wt.%) |
| Comparative Example 3 | DME (39.48) & Triethylene glycol dimethyl ether (39.53) | 2-Methyl furan (20.99) | LiFSI | 0.50 | LiNO$_3$ | 2.01 |
| * DME: 1,2-dimethoxyethane; LiFSI: (SO$_2$F)$_2$NLi | | | | | | |

**Test Example 1: Calculation of first to third mixing energies (Gmix1 to 3) at the time of mixing electrolyte and lithium polysulfide**

Using the commercialized COSMOtherm software (COSMOlogic GmbH & Co. KG) based on the COSMO-RS theory, the mixing energy at the time of mixing the electrolytes of Examples or Comparative Examples and lithium polysulfide (Li$_2$S$_n$; n is 4, 6, or 8) was calculated at room temperature (25°C), and the calculation results are summarized in Table 2 below:

[Table 2]

| | Mixed energy by lithium polysulfide (kcal/mol) | | | | | |
|---|---|---|---|---|---|---|
| | Gmix1 (Li$_2$S$_4$) | Gmix2(Li$_2$S$_6$) | Gmix3(Li$_2$S$_8$) | Gmix1-Gmix2 | Gmix1-Gmix3 | Gmix2-Gmix3 |
| Example 1 | -0.368261 | -1.17603 | -1.25084 | 0.807769 | 0.882579 | 0.07481 |
| Example 2 | -0.799997 | -1.599774 | -1.679846 | 0.799777 | 0.879849 | 0.080072 |
| Example 3 | -0.636317 | -1.385893 | -1.436826 | 0.749576 | 0.800509 | 0.050933 |
| Comparative Example 1 | -1.228703 | -1.936371 | -1.898895 | 0.707668 | 0.670192 | - 0.037476 |
| Comparative Example 2 | -0.50522 | -1.136719 | -1.140344 | 0.631499 | 0.635124 | 0.003625 |
| Comparative Example 3 | -0.64068 | -1.365863 | -1.396953 | 0.725183 | 0.756273 | 0.03109 |

Referring to Table 2, it was confirmed that the electrolytes of Examples 1 to 3 include a non-aqueous solvent of a specific composition, and contain a lithium salt and an additive at a certain concentration and content, the characteristics that Gmix1-Gmix2 is 0.73kcal/mol or more and Gmix1-Gmix3 is 0.80kcal/mol or more are satisfied.

On the other hand, it was confirmed that the electrolytes of Comparative Examples 1 to 3 exhibit relatively low values of Gmix1-Gmix2 and Gmix1-Gmix3 as the compositions of the non-aqueous solvents are different from those of Examples.

**Test Example 2: Manufacturing of lithium-sulfur secondary battery and evaluation of resistance factor**

Electrolyte

The electrolytes of Examples or Comparative Examples were used.

Manufacturing of cathode

95 parts by weight of a sulfur-carbon composite (S:C = 70:30 weight ratio) as a cathode active material (the individual sulfur content was set to 67.5% by weight based on the total weight of the cathode, and activated carbon with a pore volume of 1.8 cm$^3$/g was used as the carbon material), and 5 parts by weight of styrene butadiene rubber/carboxymethyl cellulose (SBR : CMC = 7 : 3) as a binder were mixed to prepare a cathode slurry composition, and the prepared slurry composition was coated onto a current collector (Al foil), dried at 50°C for 12 hours, and pressed using a roll press machine to manufacture a cathode (at this time, the porosity of the electrode was set to 65%).

Manufacturing of lithium-sulfur secondary batteries

The cathode manufactured above and a lithium metal anode with a thickness of 150 $\mu$m were positioned to face each other, a polyethylene (PE) separator was interposed between them, and then the electrolyte was injected to manufacture a coin cell type lithium-sulfur secondary battery. On the other hand, in the production of the battery, the cathode was used by punching at 15 phi, and the polyethylene separator was used by punching at 19phi, and the lithium metal at 16phi.

The resistance factor of the lithium-sulfur secondary battery manufactured using the electrolytes of Examples or Comparative Examples was measured and calculated according to the method described in International Patent Publication WO2016/126075.

More specifically, for the lithium-sulfur secondary battery, first, a plurality of charging initial voltage data and a plurality of charging end voltage data according to the change in the size of the charging current for each temperature and state of charge (SOC) of the secondary battery were measured, and stored in memory. Next, a charge termination IV profile was determined from multiple charge termination voltage data, and the intersection point where the charge termination IV profile meets the boundary line corresponding to the charging upper limit current or charging upper limit voltage set in advance as the charging upper limit condition was determined. Further, an initial charge IV profile was determined from the plurality of initial charge voltage data, and the first differential value of the initial charge IV profile calculated based on the current value at the intersection point was determined. Then, the determined first differential value was determined and calculated as a resistance factor corresponding to the temperature and state of charge of the secondary battery.

At this time, a current greater than 2ea was used, and the resistance factor at the maximum current (Imax) was calculated according to Equation 1 below.

## [Equation 1]

$$R = \Delta V / Imax = (OCV - Vfinal@ \; Imax) / Imax$$

For the batteries manufactured using the electrolytes of each Example and Comparative Example, the resistance factors at SOC 80% are summarized in Table 3 below. In addition, FIG. 2a shows the relation between Gmix1-Gmix2 (kcal/mol) of the electrolyte and the resistance factor (m$\Omega$) of the secondary battery at a state of charge (SOC) of 80% of the lithium-sulfur secondary batteries manufactured using the electrolytes of Examples 1 to 3 and Comparative Examples 1 to 3, and FIG. 2b shows the relation between Gmix1-Gmix3 (kcal/mol) of the electrolyte and the resistance factor (m$\Omega$) of the secondary battery at a state of charge (SOC) of 80% of the lithium-sulfur secondary batteries manufactured using the electrolytes of Examples 1 to 3 and Comparative Examples 1 to 3.

[Table 3]

|  | Resistance factor @ SOC 80 (m$\Omega$) |
| --- | --- |
| Example 1 | 199.32 |
| Example 2 | 218.95 |
| Example 3 | 340.58 |
| Comparative Example 1 | 514.73 |
| Comparative Example 2 | 595.50 |
| Comparative Example 3 | 480.65 |

Referring to Table 3 and FIGS. 2a and 2b, it was confirmed that the lithium-sulfur secondary battery manufactured using the electrolytes of Examples showed a lower resistance factor compared to those of Comparative Example at SOC 80%. In particular, it was confirmed that Examples exhibit Gmix1-Gmix2 of 0.73 kcal/mol or more and Gmix1-Gmix3 of 0.80 kcal/mol or more, which is a larger value than the electrolyte of Comparative Examples, thereby showing a lower resistance factor and excellent output.

## Claims

1. An electrolyte for lithium-sulfur secondary battery comprising a lithium salt, a non-aqueous solvent and an additive, wherein a first mixing energy(Gmix1) of the electrolyte and dilithio pertetrasulfide ($Li_2S_4$), a second mixing en-

ergy(Gmix2) of the electrolyte and dilithio perhexasulfide ($Li_2S_6$), and a third mixing energy (Gmix3) of the electrolyte and dilithio peroctasulfide ($Li_2S_8$), which are calculated at room temperature ($20 \pm 5°C$) in accordance of the theory of COSMO-RS (Conductor like Screening Model for real Solvent), satisfy the relation that Gmix1-Gmix2 is 0.73 kcal/mol or more, and Gmix1-Gmix3 is 0.80 kcal/mol or more.

2. The electrolyte for lithium-sulfur secondary battery according to claim 1, wherein the Gmix1-Gmix2 is 0.74 to 1.40 kcal/mol, and the Gmix1-Gmix3 is 0.80 to 1.50 kcal/mol.

3. The electrolyte for lithium-sulfur secondary battery according to claim 1, wherein the Gmix2-Gmix3 is 0.05 kcal/mol or more.

4. The electrolyte for lithium-sulfur secondary battery according to claim 1, wherein:

    the first mixing energy (Gmix1) is -3.02 kcal/mol to -0.02 kcal/mol,
    the second mixing energy (Gmix2) is -3.39 kcal/mol to -0.83 kcal/mol, and
    the third mixing energy (Gmix3) is -3.15 kcal/mol to -0.96 kcal/mol.

5. The electrolyte for lithium-sulfur secondary battery according to claim 1, wherein:

    the non-aqueous solvent comprises first and second organic solvents having different solubilities for lithium polysulfide ($Li_2S_n$; n is 4, 6 or 8), and
    the second organic solvent is a non-solvent for the lithium polysulfide.

6. The electrolyte for lithium-sulfur secondary battery according to claim 5, wherein the non-aqueous solvent comprises,

    70 to 85% by volume of an ether-based solvent including a dialkyl ether-based solvent and an alkylene glycol dialkyl ether-based solvent as the first organic solvent, and
    15 to 30% by volume of a furan-based solvent or a tetrahydrofuran-based solvent as the second organic solvent, wherein the dialkyl ether solvent is contained in an amount of 40 to 85% by volume based on the total volume of the non-aqueous solvent.

7. The electrolyte for lithium-sulfur secondary battery according to claim 6, wherein the furan-based solvent or the tetrahydrofuran-based solvent comprises at least one selected from the group consisting of furan, 2-methylfuran, 3-methylfuran, 2-ethylfuran, 2-propylfuran, 2-butylfuran, 2,3-dimethylfuran, 2,4-dimethylfuran, 2,5-dimethylfuran, 2-methyl tetrahydrofuran and 4-methyl tetrahydrofuran.

8. The electrolyte for lithium-sulfur secondary battery according to claim 6, wherein the dialkyl ether-based solvent comprises at least one selected from the group consisting of dimethyl ether, diethyl ether, dipropyl ether, methyl ethyl ether, methyl propyl ether, ethyl propyl ether, dimethoxyethane, diethoxyethane and methoxyethoxyethane.

9. The electrolyte for lithium-sulfur secondary battery according to claim 6, wherein the alkylene glycol dialkyl ether-based solvent comprises at least one selected from the group consisting of diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether and polyethylene glycol methyl ethyl ether.

10. The electrolyte for lithium-sulfur secondary battery according to claim 1, wherein the lithium salt is dissolved in the non-aqueous solvent at a concentration of 0.2 to 0.8 mol%.

11. The electrolyte for lithium-sulfur secondary battery according to claim 1, wherein the lithium salt comprises at least one selected from the group consisting of LiCl, LiBr, LiI, $LiClO_4$, $LiBF_4$, $LiB_{10}Cl_{10}$, $LiPF_6$, $LiCF_3SO_3$, $LiCF_3CO_2$, $LiC_4BO_8$, $LiAsF_6$, $LiSbF_6$, $LiAlCl_4$, $CH_3SO_3Li$, $CF_3SO_3Li$, $(CF_3SO_2)_2NLi$, $(C_2F_5SO_2)_2NLi$, $(SO_2F)_2NLi$ (LiFSI) and $(CF_3SO_2)_3CLi$.

12. The electrolyte for lithium-sulfur secondary battery according to claim 1, wherein the additive is contained in an amount of 0.8 to 4.0% by weight based on the total weight of the electrolyte.

13. The electrolyte for lithium-sulfur secondary battery according to claim 1, wherein the additive comprises at least one selected from the group consisting of lithium nitrate ($LiNO_3$), lithium thiocyanate (LiSCN), potassium nitrate ($KNO_3$), cesium nitrate ($CsNO_3$), magnesium nitrate ($Mg(NO_3)_2$), barium nitrate ($Ba(NO_3)_2$), lithium nitrite ($LiNO_2$), potassium nitrite ($KNO_2$) and cesium nitrite ($CsNO_2$).

14. A lithium-sulfur secondary battery comprising:

   a cathode containing sulfur as a cathode active material;
   an anode containing metallic lithium;
   a separator disposed between the cathode and the anode; and
   the electrolyte of claim 1.

15. The lithium-sulfur secondary battery according to claim 14, wherein the cathode active material comprises elemental sulfur (Ss).

16. The lithium-sulfur secondary battery according to claim 14, wherein the
   when the profiles of the initial charge voltage and the charge termination voltage in response to the change in charging current are respectively measured and derived for the lithium-sulfur secondary battery, and the resistance factor in response to the state of charge (SOC) of the secondary battery is calculated therefrom, the secondary battery exhibits a resistance factor of 400m$\Omega$ or less at SOC of 80%.

【FIG. 1】

【FIG. 2a】

【FIG. 2b】

## INTERNATIONAL SEARCH REPORT

| International application No. |
|---|
| **PCT/KR2023/015743** |

**A.    CLASSIFICATION OF SUBJECT MATTER**

**H01M 10/0569**(2010.01)i; **H01M 10/0567**(2010.01)i; **H01M 4/38**(2006.01)i; **H01M 10/052**(2010.01)i; **H01M 10/0568**(2010.01)i

According to International Patent Classification (IPC) or to both national classification and IPC

**B.    FIELDS SEARCHED**

Minimum documentation searched (classification system followed by classification symbols)

H01M 10/0569(2010.01); H01B 1/06(2006.01); H01M 10/05(2010.01); H01M 10/052(2010.01); H01M 10/0561(2010.01); H01M 10/36(2006.01); H01M 4/38(2006.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬-황 이차전지용 전해질(electrolyte for lithium-sulfur secondary battery), 리튬염(lithium salt), 용매(solvent), COSMO-RS(conductor like screening model for real solvent), 혼합에너지(mixing energy, Gmix)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2021-0138511 A (LG ENERGY SOLUTION, LTD.) 19 November 2021 (2021-11-19)<br>    See abstract; paragraphs [0001], [0017]-[0019], [0026], [0030], [0035]-[0036], [0038], [0041]-[0042], [0051], [0060]-[0062] and [0067]-[0078]; and claims 1, 12 and 14. | 1-16 |
| A | KR 10-2020-0016045 A (SAMYANG CORPORATION) 14 February 2020 (2020-02-14)<br>    See entire document. | 1-16 |
| A | JP 2015-125934 A (KYOTO UNIVERSITY et al.) 06 July 2015 (2015-07-06)<br>    See entire document. | 1-16 |
| A | JP 2008-218404 A (NIPPON SHOKUBAI CO., LTD.) 18 September 2008 (2008-09-18)<br>    See entire document. | 1-16 |
| A | KR 10-1166274 B1 (SION POWER CORPORATION) 17 July 2012 (2012-07-17)<br>    See entire document. | 1-16 |

☐ Further documents are listed in the continuation of Box C.      ☑ See patent family annex.

| | |
|---|---|
| *     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **15 January 2024** | **16 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/015743**

| Patent document cited in search report | | | Publication date (day/month/year) | Patent family member(s) | | | Publication date (day/month/year) |
|---|---|---|---|---|---|---|---|
| KR | 10-2021-0138511 | A | 19 November 2021 | CN | 114556664 | A | 27 May 2022 |
| | | | | EP | 4044316 | A1 | 17 August 2022 |
| | | | | JP | 2022-550941 | A | 06 December 2022 |
| | | | | JP | 7389244 | B2 | 29 November 2023 |
| | | | | WO | 2021-230661 | A1 | 18 November 2021 |
| KR | 10-2020-0016045 | A | 14 February 2020 | KR | 10-2261432 | B1 | 08 June 2021 |
| JP | 2015-125934 | A | 06 July 2015 | CN | 105849967 | A | 10 August 2016 |
| | | | | CN | 105849967 | B | 07 June 2019 |
| | | | | DE | 112014005987 | B4 | 27 October 2022 |
| | | | | DE | 112014005987 | T5 | 15 September 2016 |
| | | | | JP | 6250879 | B2 | 20 December 2017 |
| | | | | US | 10153491 | B2 | 11 December 2018 |
| | | | | US | 2017-0033359 | A1 | 02 February 2017 |
| | | | | WO | 2015-098766 | A1 | 02 July 2015 |
| JP | 2008-218404 | A | 18 September 2008 | JP | 5100417 | B2 | 19 December 2012 |
| KR | 10-1166274 | B1 | 17 July 2012 | CA | 2552418 | A1 | 28 July 2005 |
| | | | | CN | 101834310 | A | 15 September 2010 |
| | | | | CN | 1930725 | A | 14 March 2007 |
| | | | | CN | 1930725 | B | 26 May 2010 |
| | | | | EP | 1702383 | A2 | 20 September 2006 |
| | | | | JP | 2007-518230 | A | 05 July 2007 |
| | | | | JP | 5094124 | B2 | 12 December 2012 |
| | | | | KR | 10-2006-0125853 | A | 06 December 2006 |
| | | | | US | 10985403 | B2 | 20 April 2021 |
| | | | | US | 2005-0147886 | A1 | 07 July 2005 |
| | | | | US | 2007-0082264 | A1 | 12 April 2007 |
| | | | | US | 2011-0059350 | A1 | 10 March 2011 |
| | | | | US | 2014-0287326 | A1 | 25 September 2014 |
| | | | | US | 2018-0198164 | A1 | 12 July 2018 |
| | | | | US | 7358012 | B2 | 15 April 2008 |
| | | | | US | 8748043 | B2 | 10 June 2014 |
| | | | | US | 9859588 | B2 | 02 January 2018 |
| | | | | WO | 2005-069409 | A2 | 28 July 2005 |
| | | | | WO | 2005-069409 | A3 | 15 September 2005 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220139326
- KR 20190011963

- WO 2016126075 A

**Non-patent literature cited in the description**

- **A. KLAMT**. COSMO-RS: From Quantum Chemistry to Fluid Phase Thermodynamics and Drug Design. Elsevier, 2005